# EUROPEAN PATENT APPLICATION

(11) **EP 1 798 623 A1**
(43) Date of publication of application: **20.06.2007**
(21) Application number: 05785807.8
(22) Date of filing: 12.09.2005
(51) Int. Cl.: G05D 16/06, F17C 13/00, F23K 5/00

(54) **PRESSURE REGULATOR**

(30) Priority: 14.09.2004 JP 2004266463; 25.08.2005 JP 2005243658
(71) Applicant: Tokai Corporation, Tokyo 151-0073 (JP)
(72) Inventor: Nakamura, Yasuaki c/o Fuji Oyama Factory, Sunto-gun, Shizuoka 410-1431 (JP); Usui, Hideto c/o Fuji Oyama Factory, Sunto-gun, Shizuoka 410-1431 (JP); Komiyama, Satoshi c/o Fuji Oyama Factory, Sunto-gun, Shizuoka 410-1431 (JP); Hirotomi, Mitsuo c/o Fuji Oyama Factory, Sunto-gun, Shizuoka 410-1431 (JP)
(74) Representative: Lukaszyk, Szymon
(86) International application number: PCT/JP2005/017207
(87) International publication number: WO 2006/030923

(57) **Abstract**

A pressure regulator, comprising a pressure regulating mechanism and a connector. A supply connecting tool (3) supplying a pressurized fluid to a body part (11) with the built-in pressure regulating mechanism (5) is connected to the connector (2) to secure excellent pressure regulating function by preventing the pressure regulating function from being affected by the connecting operation of the connecting tool and supply a fluid to stop the reverse flow of fluid caused by the attaching/detaching operations of the connecting tool. The connector (2) comprises a link member (544) openably operating a valve mechanism (6) according to the connecting operation of the supply connecting tool (3). The pressure regulating mechanism (5) comprises a pressure regulating valve (55) operated according to the deviation of a diaphragm (52) to regulate the pressurized fluid to a secondary pressure. The link member (544) is formed separately from the pressure regulating valve (55). Two reverse flow prevention valves (56) and (57) stopping the reverse flow of fluid are installed on the inside and outside of the pressure regulating valve (55).

## Description

### Technical Field

This invention is related to the pressure regulation device, which is equipped with both a pressure regulation mechanism that enables producing a fixed secondary pressure, and a connector, on which a pressure flow supplying feed connector can be attached.

### Background Art

With liquefied gas devices and gas supply equipment, the pressure regulation devices, used to reduce the pressure of the high pressure gas, have been used on a regular basis. They are called pressure regulators or centrifugal spark advancers. These pressure regulators detect a secondary pressure using a specific diaphragm and, since they are equipped with a pressure regulation valve, which moves when interlocked to the deflection of the diaphragm, they initiate the operation of the valve so the secondary pressure will remain fixed, even if the primary pressure fluctuates. In other words, they have a structure that allows producing a fixed secondary pressure.

However, in the case of a pressure fluid being introduced to the pressure regulator, it may be possible to equip the regulator with a connector that has a detachable pressure flow supplying feed connector.

If such a connector is attached to the connector, there is a possibility of danger that, in response to the connection, the valve mechanism of the connector will start its operation and supply the pressurized fluid flow. In such case, concurrently to the connection, the diaphragm of the pressure regulator will receive the deforming force, thus the pressure regulating function will be lost and a fluid of a higher-than-set pressure will be fed.

Moreover, there is also a problem of polluting the surroundings. While the connector is being attached or detached from the connector, the pressure fluid, which has remained within the pressure regulating mechanism, may flow backwards and cause leakage.

Considering the above-mentioned points, the invention provides a pressure regulator with both a pressure regulating mechanism and a connector, featured with a fine pressure regulating function, on which this function is not influenced by the connection of the connector. The aim of the invention is to provide a pressure regulation device designed to prevent the backwards flow of the pressure fluid during attaching/detaching the connector.

### Disclosure of the Invention

The pressure regulator device according to the invention, is a pressure regulation device having a body part with a built in pressure regulation mechanism and a connector installed on the body part, to which a pressurized fluid supplying feed connector is attached. The connector is equipped with a linking member, which initiates the operation of the feed connector's valve mechanism in response to the connection of the connector to the feed connector. The pressure regulation mechanism is provided with a regulation valve, operating in response to the deflection of the diaphragm, and regulating the pressure of the introduced fluid pressure to the fixed secondary pressure. The characteristic feature of the structure of the device lies in the fact, that the linking member and the regulation valve are formed separately.

The valve mechanism of the pressure regulation device has a stem valve placed substantially at the center of the valve mechanism's shaft. The linking member is constructed with linking projection that extends toward the connection's direction. It may be produced in such a manner, that when the connector and the feed connector are being connected, the linking projection's tip may contact the stem valve, and initiate the valve opening.

In this case, the pressure regulation mechanism should be provided with a substantially cylindrical insertion member. The insertion member should have a partition section projecting inwardly placed at the fixed place of the direction of connection. Substantially at the center of the partition section, there may be formed a linking projection. It would be desirable, if on both sides of the linking projection there would be a connecting opening, passing through the partition section. It would be even more desirable, if the surface of the partition section side, where the feed connector is being connected, would be covered with a disk-shaped dust filter, covering the connecting opening and fixed to the section, with a linking projection passing through the filter.

Alternatively, the pressure regulation mechanism should have a substantially cylindrical insertion member. The insertion member should have a partition section projecting inwardly at the fixed place of the direction of connection. The partition section would have an opening placed substantially at the center thereof, wherein through the opening a linking projection passes.

It would be desirable, if on the side, where the feed connector is being connected, and on the other side, there would be a substantially cylindrical coupler, holding a plug with said linking projection. It would be even more desirable, if said coupler would have a dust filter at the surface of the side where the feed connector is being connected and on the other side.

Moreover, as for the insertion member, it would be desirable, if on the inner periphery surface around said linking projection there is formed a taper, so that the diameter of the opening would become wider towards the feed connector side.

Further, the pressure regulator device according to the invention may be equipped as well with two check valves, preventing the backflow of the fluid, on the inside and outside of the pressure regulation mechanism's regulation valve.

According to other subject of the invention, there is provided a pressure regulation device having a body part with a built in pressure regulation mechanism and a connector installed on the body part, to which a pressurized fluid supplying feed connector is attached. The pressure regulation mechanism's is characterized by the fact, that it is provided with a regulation valve, operating in response to the deflection of the diaphragm, and regulating the pressure of the introduced fluid pressure to the fixed secondary pressure, and with two check valves, preventing the backflow of the fluid, placed on the inside and outside of the regulation valve.

It is very advantageous, if the first check valve is installed on the low pressure side, engaged in closing operation with the deflection of diaphragm, and the other on the outside of the regulation valve, engaged in closing operation by receiving a pressure from inside of the regulation valve.

It is particularly advantageous if the second check valve has a form of an elastic plate that covers the opening of the passage duct. It would be desirable, if the center layer of the elastic plates were made of foam, and the external layers were made of impermeable material.

As with the pressure regulation device according to the invention, the diaphragm is put between the body case, forming a pressure regulation chamber together with the first surface, and the cover case, forming an atmospheric air chamber with the second surface. While the pressure regulation chamber receives the pressure fluid, the atmospheric air chamber is connected to atmospheric air. The body case may be shaped to have the hollow part on the diaphragm side surface, in order to house the diaphragm.

Moreover it would be desirable, if in the surface of the body case on the pressure regulation chamber side there were at least one passage groove, through which the pressure fluid would pass. It would be even more desirable, if in the pressure regulation chamber there were an outlet through which the regulated fixed secondary pressure fluid may be discharged, and if the passage groove were formed on a different location than the outlet, on the opposite side of the axis of the direction of connecting operation.

Since in this pressure regulation device the linking member of the connector, which in response to the feed connector's connection initiates the opening of the valve mechanism, and the regulation valve of the pressure regulation mechanism, which in response to the deflection of diaphragm starts to operate and regulates the pressure to the fixed secondary pressure level, are formed separately, we managed to increase the process reliability. Now such an operation does not involve any movement of the regulation valve or the diaphragm, when connecting the connector and the feed connector, fine pressure regulation function is being preserved, and a fluid of a secondary pressure higher, than the set one, is not being spouted out.

Moreover, with pressure regulation devices according to the invention, since there are two check valves installed on both the inside and outside of the regulation valve of the pressure regulation mechanism, in order to prevent the backflow of the pressure unit, it is possible to fast and surely prevent any leakage due to the backflow of the pressure fluid, even in case the pressure within the pressure regulation mechanism would be low or high.

### Brief Explanation of Figures

Fig. 1 is a general cross section, showing the separation state of the connector according to first implementation embodiment of the invention.

Fig. 2 is an enlarged cross section of the most important part of the connector structure.

Fig. 3 is an exploded perspective view of the pressure vessel with implemented feed connector.

Fig. 4 is an exploded perspective view of the main parts of the ratchet mechanism.

Fig. 5 is a cross section, showing the maximum forward position during the connecting of the feed connector.

Fig. 6 is a cross section, showing the lock position while the connector and the feed connector are connected.

Fig. 7 is a cross section perspective view, showing the relation between the feed connector and operating parts in an unlock condition.

Fig. 8 is a cross section perspective view from Fig. 7, in a lock condition.

Fig. 9 is an exploded perspective view of the pressure regulation mechanism.

Fig. 10 is a cross section of another exemplary embodiment of the second check valve.

Fig. 11 is a cross section showing the insertion condition of the pressure fluid on the example of Fig. 10.

Fig. 12 is a cross-sectioned exploded perspective view, in which the pressure regulation mechanism is implemented according to the method 2, wherein the parts are shown separately.

Fig. 13 is an enlarged cross section, showing an enlarged upper part of the pressure regulation mechanism from the Fig. 12.

Fig. 14 is a cross section exploded perspective view, in which the lower part of the pressure regulation mechanism assembled on the Fig. 12, is cross-cut within a segment of around 90 degrees of the circle centered around its axis, wherein the parts are shown separately.

Fig. 15 is a cross section showing the maximum forward position while connecting the feed connector.

### Advantageous embodiments of the present invention

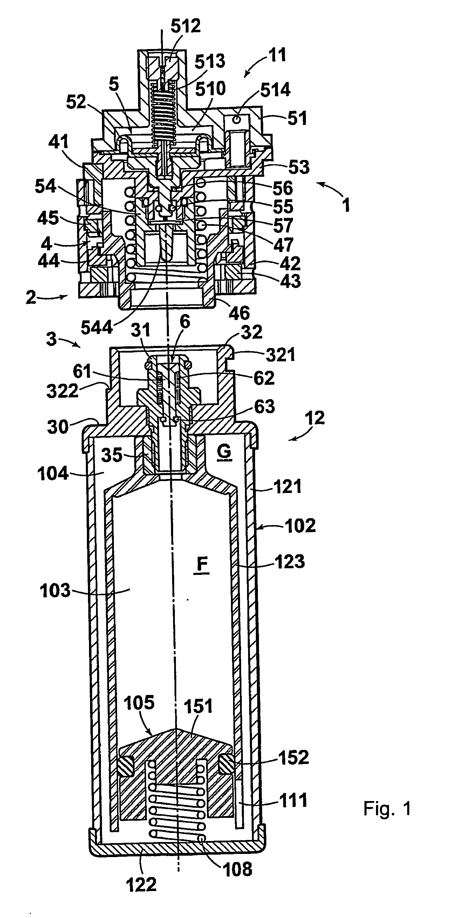

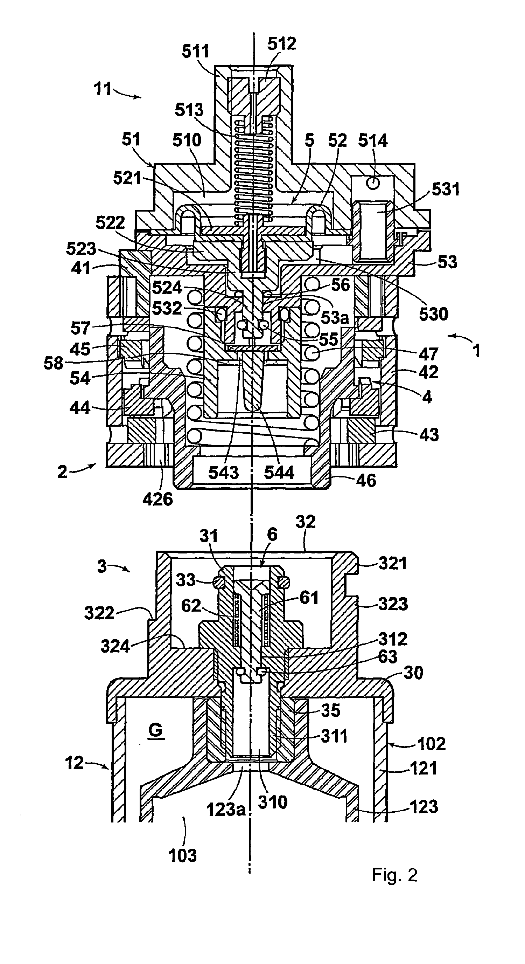

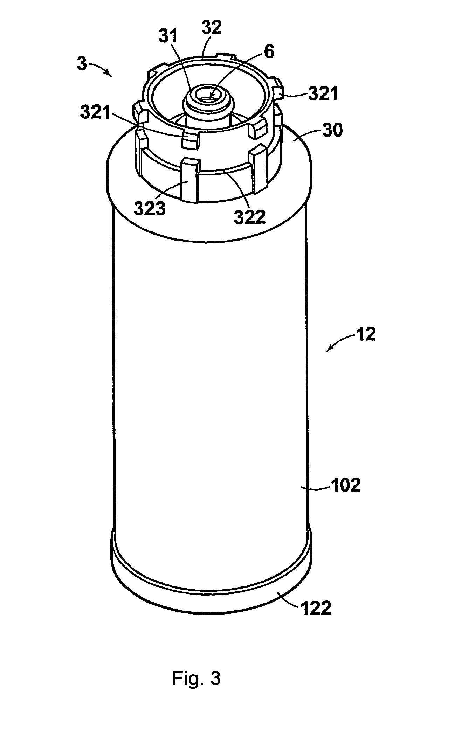

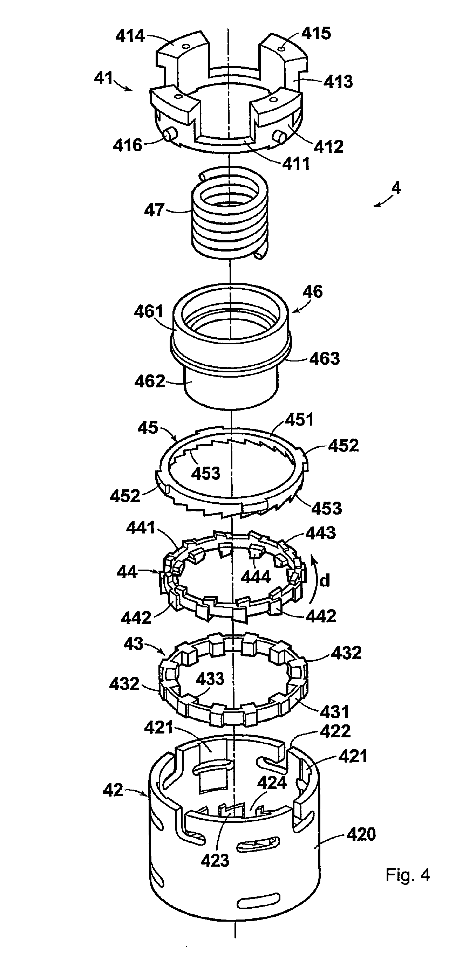

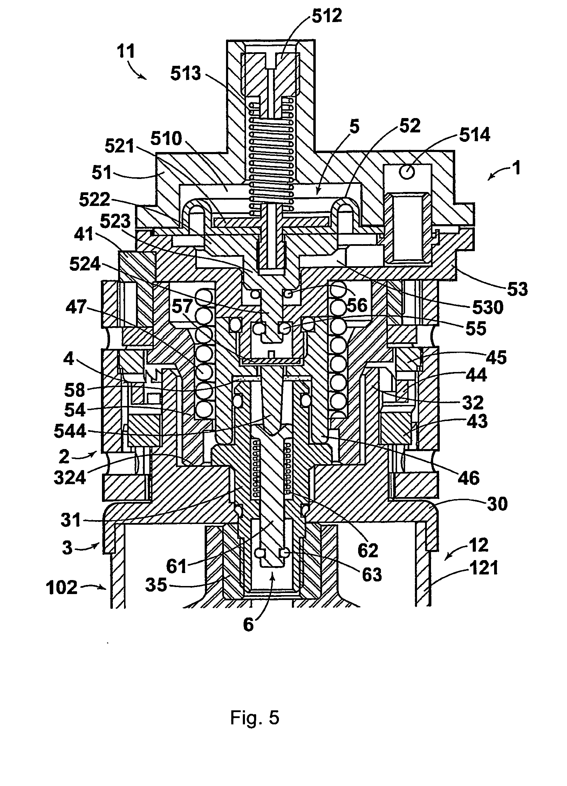

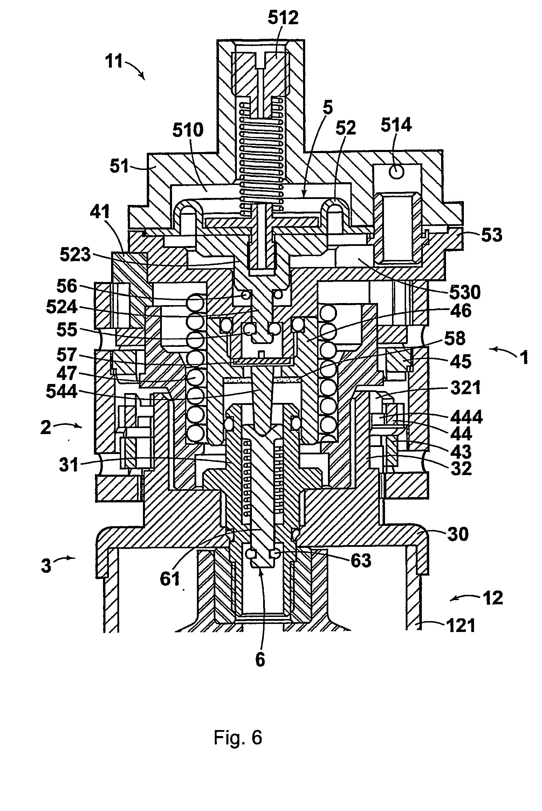

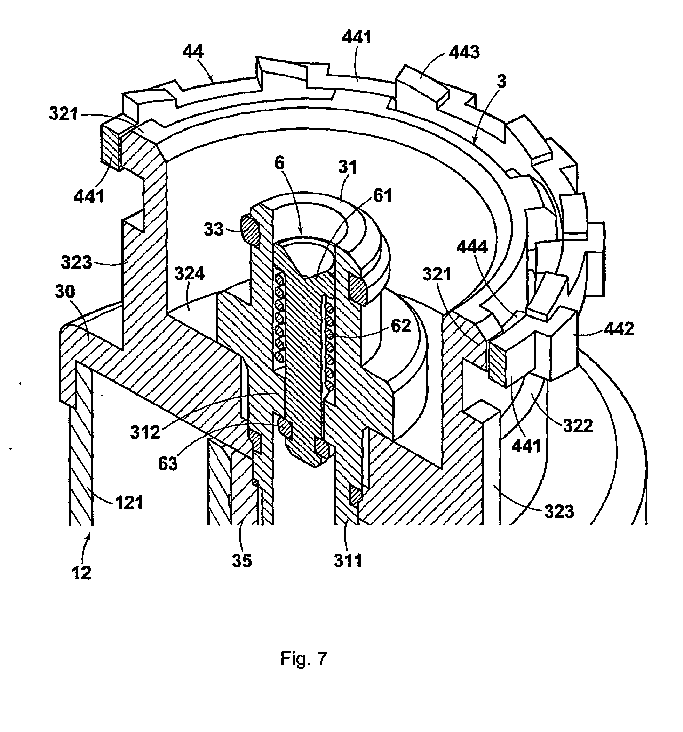

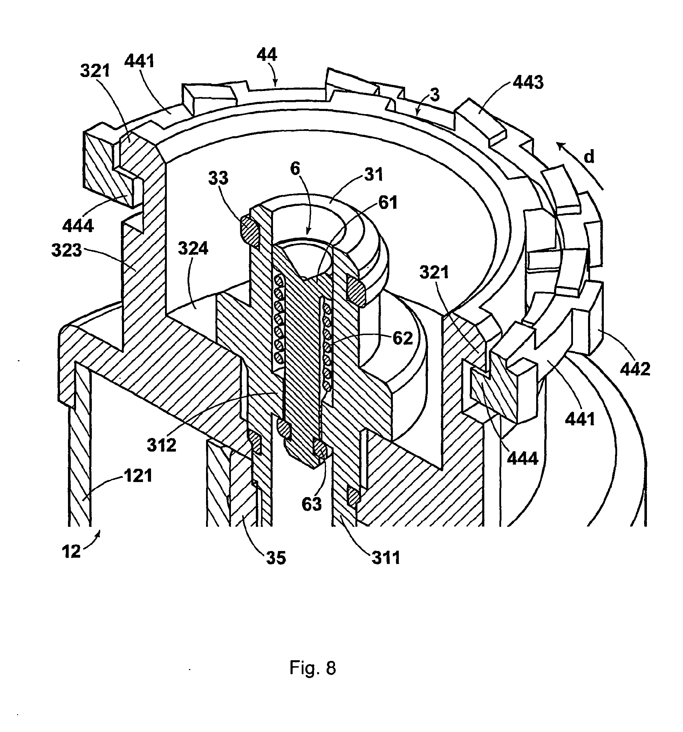

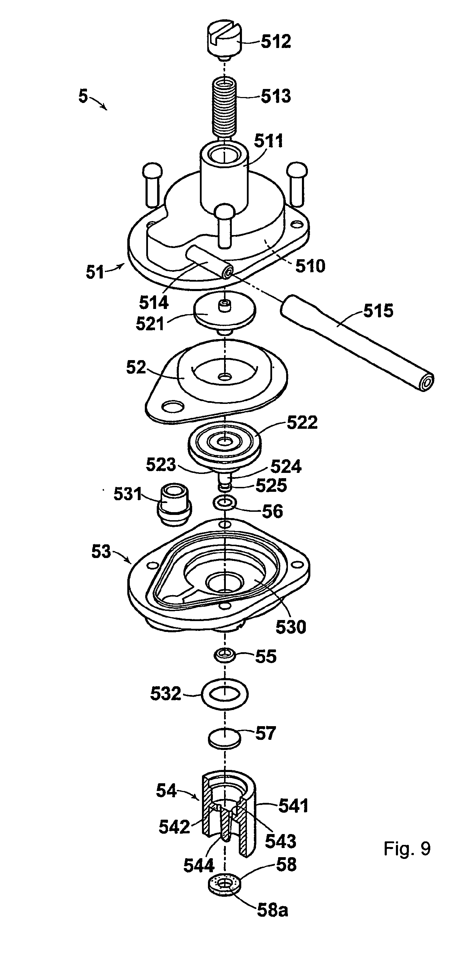

The exemplary implementations of the present invention are described thereinafter in details. Fig. 1 is a general cross section showing the separation state of the connector of the pressure regulation device in the first exemplary implementation of the invention, fig. 2 is a enlarged cross section, fig. 3 is an perspective view of the pressure vessel with implemented feed connector, fig. 4 is an exploded perspective view of the main parts of the ratchet mechanism, fig. 5 is a cross section, showing the maximum forward position during the connecting of the feed connector, fig. 6 is a cross section showing the lock position of the connector, fig. 7 is a cross section perspective view showing the unlock condition of the connector, fig. 8 is the same cross section perspective view as on drawing 7, however one which moved to the lock condition, and fig. 9 is an exploded perspective view of the pressure regulation mechanism. Still more, in the following explanations we use expressions like "up,", "down,", "left", and "right," according to the directions on the drawings, but the real installation directions may be placed not only vertically, as on fig. 1, where the axis goes up and down (it may be the opposite), but also horizontally.

The pressure regulation device 1 as implemented on figs. 1 and 2, has a body part 11, equipped with a pressure regulation mechanism 5 (centrifugal spark advancer mechanism), regulating the supplied fluid pressure to the fixed secondary pressure. The body part 11 is equipped as well with a connector 2, to which a feed connector 3 is connected in a detachable way. The connector 3 is installed onto the pressure vessel 12, e.g. fuel cartridge, supplying fluid in a pressurized condition.

The above mentioned body part 11 is installed in fuel cells using fluids as e.g. liquid fuel. When the fluid F is supplied from a pressure vessel 12 to the body part 11, the feed connector 3 is connected in the lock condition through the ratchet mechanism 4 of the connector 2. The feed connector 3 is equipped with a valve mechanism 6, which has at the plug-shaped supply connection mouth 31 a stem valve 61, biased toward the valve opening direction by the spring 62.

The operation of this structure according to the invention is as follows. First, the tip of the feed connector 3 is inserted to the inside of the connector 2 and connected. In response to the connection of the feed connector 3, the stem valve 61 moves to the inside and starts to operate. In response to the supply of pressurized fluid, the pressure regulation mechanism 5 of the body part 11 starts to operate, and the fluid with a regulated secondary pressure starts to be released from the pressure regulation device 1.

The key part of the operation of the structure is that, during creating the above-mentioned connection, the operation of pushing forward in order to connect the feed connector 3 is accompanied by the movement of the second ring 44 of the ratchet mechanism 4. The second ring 44 interlocks with a part of feed connector 3, and preserves the lock condition of the connector 2. When it comes to separation and the next pushing forward operation of the feed connector 3 is on the way, the second ring 44 moves further, and causes the unlock condition. The unlock spring 47 coerces the connector 2 and feed connector 3 to separate.

The structure of each part is presented below in details. First, the pressure regulation mechanism within the body part 11 of the pressure regulation device 1, as shown on figs. 2 and 9, is equipped with a diaphragm 52, placed between cover case 51 and body case 53; an insertion member 54, connected to body case 53, through which the primary pressure fluid (liquid or gas) is being introduced; a regulation valve 55, which in response to the diaphragm 52 reduces and regulates the pressure from primary to secondary value; a first check valve 56 (low pressure check valve), preventing a leakage of a fluid; a second check valve 57 (high pressure check valve) consisting of elastic plate; and with a dust filter 58.

The above-mentioned first check valve 56 functions as well as a regulation valve. Moreover, the regulation valve 55 and the first check valve 56 operate in response to the deflection of diaphragm 52, and due to the mutually opposite opening/closing operation, they regulate the pressure from primary to secondary value. The primary pressure regulation characteristics of the regulation valve 55 and the first check valve 56 are reverse. Therefore at the diaphragm 52 the primary pressure loss within the regulation valve 55 exposed area, and the secondary pressure loss within the first check valve exposed area add toward the same direction. Due to the combination of both pressure regulation characteristics, the aberration of the secondary pressure regulation, caused by the pressure loss fluctuations occurring in response to the primary pressure fluctuations, is compensated, and the fixed secondary pressure is achieved. Still more, the regulation valve 55 and the first check valve 56 open and close reversely in response to the deflection of the diaphragm 52. The idea is to eliminate the pressure regulation fluctuations, caused by the aberrations of the mounting position of both valves, and to simplify the production by decreasing of accuracy requirements.

The ratchet mechanism 4 of the connector 2 is installed on the outer periphery of the insertion member 54 of the pressure regulation mechanism 5. This ratchet mechanism 4, as shown on fig. 2, consists of the holder body 41 and ratchet holder 42, which are fixed to the body case 53; first, second and third rings (43, 44 and 45), arranged inside the ratchet holder 42; spring holder 46, sliding freely in the axis direction; and of unlock spring 47.

In response to the connection of the feed connector 3, the second ring 44 rotates by one frame, and interlocks with the feed connector 3. By the next push forward operation of the feed connector 3, the second ring 44 rotates by another frame, unlocks the interlock, and by the force of the unlock spring's 44 urge, the feed connector 3 is forced to separate. During the above mentioned one frame rotation, the force operates in the rotation direction, due to the pressure operative on the slanting surface between the rings.

The feed connector, installed on the head of the pressure vessel 12, has at the center of the connecting member body 30, a connection mouth 31, which contains a valve mechanism 6 inside. The connection mouth 31 has on its outer periphery a connection cylinder 32, protruding toward the axis direction. Then, as shown on the fig. 3, at the outer periphery of the connection cylinder 32, there are equally spaced interlocking projections 321, which can interlock with the locking projections 444 of the second ring 44. Further, as shown on figs. 1 and 2, the cross section position of the connection cylinder 32 differs (left and right are reversed).

At the predefined position at the edge of the connection cylinder 32 there are parts in a form of the pressure step 322, projecting out of the outer side. As will be discussed later, in response to the connection movement, they come into contact with the inner projections 433 of the first ring 43, and they are moved toward the direction of the axis. Moreover, there are convex members 323 in the shape of spline, protruding from the pressure step part 322 towards the interlocking projections 321. They and the interlocking projections 321 form in between them a circular space, where the second ring 44 rotates, and they interlock with the vertical groove 426 inside the lower part of the ratchet holder 42, creating a detention.

The connection mouth 31 has a pipe-like shape. A seal member 33 in the form of the O ring is attached to the outer periphery of the tip part. A nut 35 is tightened and installed to the bottom end part 311, which passes through the connection body 30. The stem valve 61 of the valve mechanism 6 is arranged to slide freely within the inner periphery of the intermediate step part 312. A valve body 63 is attached to the lower part of the stem valve 61, protruding out of the intermediate step part 312 by the O ring. The stem valve 61 may be contacted by the tip of a linking projection 544 (linking member) of the insertion member 54 at the hollow part of the stem valve's head. A spring 62 (return spring) is inserted in a squeezed position between the back face of the stem valve's head and the intermediate step part 312, and it biases toward the valve opening direction.

Referring to figs. 2 and 4, the structure of ratchet mechanism of the connector 2 may be explained in details. The ratchet holder 42, as shown at the lower part of the fig. 4, has a tubular shape, and the top end of the cylinder part 420 is fixed to the holder body 41, as shown in the upper part of the same drawing. At the inside of the cylinder part 420 of the ratchet folder 42, there are four circumferential first guide grooves 421, which extend from one end to the rough center position in the direction of the axis; L-shaped interlocking grooves 422, which are between the first guide grooves 421, and pass through in and out the upper end surface; twelve ratchet convex parts 423, equally spaced on the inside periphery of the lower edge part side; and twelve second guide grooves 424, equally spaced on the inner periphery surface, between the ratchet convex parts, extending towards the direction of the axis. At the upper edge part of the ratchet convex part, there are as well a slanted surface and engaging step part. From the upper edge of the engaging step part also a slanted surface is directed towards the second guide groove 424.

The first ring 43 (slide ring) has twelve guide projections 432 equally spaced on the outer periphery of the ring shaped base 431, and internal periphery projections 433, placed at the same positions as guide projections 432 on the inner periphery. The bottom and top edge surfaces of the first ring 43 are flat. Usually, outer periphery guide projections 432 are inserted into the second guide grooves 424 of the ratchet holder 42. This first ring 43 cannot rotate; the only possible movement thereof is up-and-down movement. When the top edge of the part 322 of the connection cylinder 32 of the feed connector 3 is in its upward position, it may contact the bottom surface of the internal periphery projections 433. By the pressure applied on that part (322), the first ring 43 moves upward towards the axis direction. Moreover, the interlocking projection 321 of the connection cylinder 32 may be inserted into the vertical groove between the internal periphery projections 433.

The second ring 44 (lock ring) has twelve guide projections 442 equally spaced on the outer periphery of the ring shaped base 441; sliding claw parts 443, endowed at the top surface with twelve equally spaced slanted surfaces; and twelve locking projections 444, equally spaced on the inner periphery. The second ring 44 rotates in the direction d. The outer periphery guide projections 442 and the inner periphery locking projections 444 are placed at the same position circumferentially. They are both joined at the lower part of the ring shaped base 441, and there is a slanted surface, high in the front of the rotation direction d, and low in the rear. Equally shaped slanted surface is on the top surface of the sliding claw parts 443, projecting towards the top surface.

The outer periphery guide projections 442 are inserted into the second guide grooves 424 of the ratchet holder 42. They guide the sliding movement of the second ring 44 toward the axis direction. When the upward movement of the second ring 44 is long, the guide projections 442 are pulled out of the second guide grooves 424, and the second ring 44 may rotate. Due to that rotation, the bottom edge slanted surface of the guide projections 442 lower with a possibility of coming into contact with the slanted surface of the ratchet convex part 423 or the top edge slanted surface of the engaging step part. Then, by the contact of these slanted surfaces, the rotation continues until it stops when the tip of the guide projections 442 engage the engaging step part and enter the lock state, or when the separation state is reached with guide projections 442 inserted into the guide grooves 424. Moreover, during the connecting operation, the internal periphery locking projections 444 move between the locking interlocking projections 321 of the connection cylinder 32 of the feed connector 3, and may interlock.

The third ring 45 (guide ring) has respectively four guide projections 452 equally spaced on the outer periphery of the ring shaped base 451, and ratchet teeth 453, with a ratchet claw-shaped slanting surface on the bottom edge surface. The guide projections 452 are inserted into the first guide grooves 421 of the ratchet holder 42. The third ring 45 may move up and down in the axis direction (rotation is not possible), and at the bottom edge position the guide projections 452 are engaged at the bottom edge part of the first guide grooves, regulated there, and separated from the second ring 44. The ratchet teeth 453 of the bottom edge surface come into contact with the sliding claw part 443 of the top surface of the second ring 44, and due to the contact of both slanted surfaces the second ring 44 is turned.

Spring holder 46 is comprised of a tubular-shaped upper cylinder part 461, and a lower cylinder part 462 of a smaller diameter. Inside the holder, an unlock spring 47 is inserted in a squeezed condition, and a bottom edge outer periphery step part 463 of the upper cylinder part 461 comes into contact from above with the locking projections 444 of the second ring 44, and biases them. In that way, any free move is blocked, when the third ring 45 and the second ring 44 are separated.

Moreover, the lower cylinder part 462 of the spring holder 46 is inserted inside the first, second and third rings (43, 44 and 45), and at the bottom extends to the inner space of the ratchet holder 42. It comprises an opening at the center of the bottom surface receiving the unlock spring 47. In the opening, the connection mouth 31 of the feed connector 3 is inserted. Still more, the bottom edge part of the lower cylinder part 462 may come in contact with the inner end surface 324 of the feed connector's 3 connection body 30. Due to the connecting operation of the feed connector 3, the spring holder 46 may resist the unlock spring 47 and move upwards in the direction of the axis.

The unlock spring 47 is a coiled spring, put between the bottom face of the flange of the connector's 2 body case 53. It presses downward the third ring 45 through the spring holder 46, and biases the feed connector 3 in the separation direction.

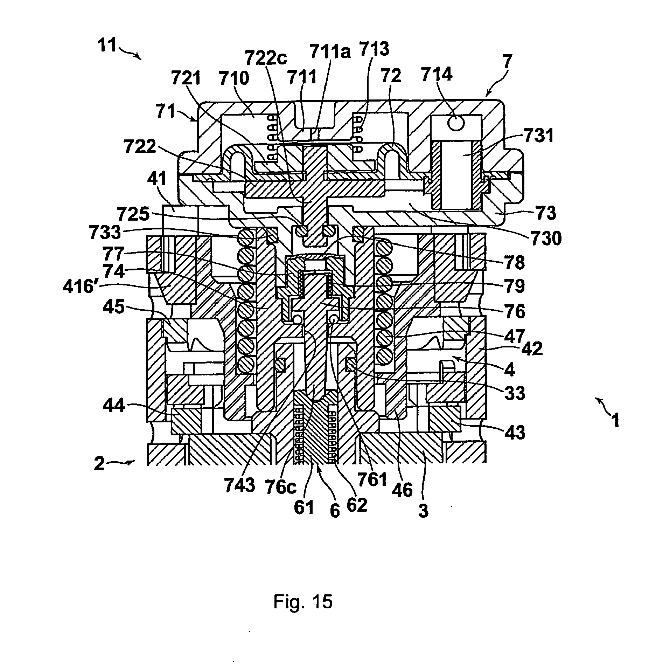

The holder body 41 fixes the diaphragm 52 of the connector 2, and is attached to the body case 53. It has four fixing parts 412, equally spaced and extending upwardly, connected at the lower part ring body 411, and vertical grooves 413 placed between fixing parts 412. A fixing screw hole 415 is located on the flange part 414, projecting outwardly from the top edge of the fixing part 412. In the lower part of the outer face of the each fixing part 412, there are four pin-shaped projections 416 directed outwardly. These pin-shaped projections 416 may interlock with the L-shaped interlocking groove 422 of the ratchet holder 42, forming the assembly. Further, according to first exemplary implementation of the present invention, the interlocking of the holder body 41 and ratchet holder 42 has a structure described heretofore, however this invention is in no way limited to this structure. For example, an engage claw 416' (see fig. 15), interlocking to a substantially oval hole placed approximately at the center of the up-down direction of the ratchet holder's 42 first guide groove 421, is formed on the outer periphery surface of the holder body 41. By pushing it into the ratchet holder 42 without rotating the holder body 41, the engage claw 416' is removed from the oval hole. Such a construction is also possible.

Below, the detailed explanation of the structure of pressure regulation mechanism 5 is particularly described. By joining the body case 53 and cover case 51 by the diaphragm 52, the internal space is divided into a pressure regulation chamber 530 and an atmospheric air chamber 510. The diaphragm 52 may elastically deflate receiving a secondary pressure from the pressure regulation chamber 530, in response to the pressure difference with the atmospheric air chamber 510. There is a support element 521 on the side of the atmospheric air chamber 510, and a shaft 522 on the side of the pressure regulation chamber 530 respectively attached to the center of the diaphragm 52. There is a possibility of movement as a whole structure in response to deflation of the diaphragm, in the direction of the axis.

The shaft 522 has a boss section 523, attached to the diaphragm 52 and located in the pressure regulation chamber 530, and a shank 524, extending from the tip of the boss section 523 toward the direction of the axis. At the tip of the shank 524, there is a circumferential groove section 525. To this groove section 525 the regulation valve 55 comprising an O ring is attached. At the basis of the shank 524, the first check valve 56 comprising an O ring (elastic body) is attached to the tip surface of the boss section 523.

The support element 521 has a bolt in the middle of the flange part, which closely adheres to the diaphragm 52, passing through its center, and on the other side is joined with the shaft 522. Moreover, one end of the pressure regulation spring 513, which is installed inside the cylinder part 511 of the cover case 51 and is used for the pressure predefining, comes into contact with the support element 521. The other end of the pressure regulation spring 513 comes into contact with a pressure regulation screw 512 (adjuster), which is tightened by a screw to the cylindrical part 511 in a way, that the its position regulation is possible. In response to the regulation of the axis direction position of the pressure regulation screw 512, the bias force of the diaphragm 52 is regulated by the pressure regulation spring 513.

The insertion member 54 positioned at the bottom edge has the outer periphery cylindrical part 541; the intermediate partition section 542; the linking projection 544, protruding downward from the partition section 542 and which operation is linked to the stem valve 61; and a connecting hole 543 passing through partition section on both sides of the linking projection.

Further, on the top face of the partition section 542 of the insertion member 54, there is the second check valve 57 for the purpose of closing the high pressure, which can close the opening of the connecting hole 543. It is an elastic plate, made from e.g. rubber or sandwich plate. In other words, when the feed connector had been separated within some level of high secondary pressure condition in the pressure regulation chamber 530, due to this secondary pressure the second check valve 57 would have closed the connecting hole and function as a backflow stop valve, preventing the fluid leakage.

In the insertion member 54, the upper end part of the cylindrical part 541 is joined in a detachable manner by the O-ring 532 to the outer periphery of the cylindrical bottom part of body case. On the other end side, a seal member of the outer periphery of the feed connector's 3 connection mouth 31 is being fit, and the pressurized fluid is introduced.

Inside the cylindrical part of the bottom tip, the body case 53 is equipped with the shank 524 of the shaft 522. The shank 524 has an inserted partition wall 53a, which can slide freely. The outside and inside of that wall 53a is opened and closed by the regulation valve 55 and the first check valve 56. The opening and closing operation of the valves is reversed, so during the forward movement of the shank 524, the regulation valve 55 opens, and during the backward movement, the first check valve 56 opens. Moreover, the first check valve 56 is endowed with a function, that when the pressure in the pressure regulation chamber 530 is low, and the feed connector 3 is separated, the valve is closed by the secondary pressure, and stops the backflow of the fluid.

On the side of the pressure regulation chamber 530, there is an exhaust opening, which exhausts the regulated secondary pressure gas through the cylindrical member 531. A pipe 515 is connected to this exhaust opening 514, which induces the regulated pressure fluid to the fuel cell.

When the feed connector 3 is being connected to the connector 2, the tip of the linking projection 544 of the previously described insertion member 54 pushes the stem valve 61 and initiates its opening. The linking projection 544 is fixed to the partition section 542 of the insertion member 54, and comprises a separated structure with the shank 524, moving in response to the diaphragm 52. It does not receive the deflation force of the diaphragm 52 during the connection operation. In other words, it is possible to link an operation of the stem valve 61 to the tip of the shank 524, but in this case if the pushing force were maintained as to continue the maximum push forward condition, due to this the diaphragm 52 would deflate, the pressure regulation function would be lost, and there is a danger, that a fluid of a pressure higher than set secondary pressure value would be supplied. However, since the diaphragm and the linking projection 544 are separated, the pressure regulating function would be preserved, and the supply of a fluid of a pressure higher than the predefined secondary pressure value shall be stopped.

On the bottom face of the partition section 542 of the insertion member 54, there is installed a filter 58, which purpose is to filter any foreign bodies from the supplied fluid, e.g. dust. The filter 58 is disc-shaped element with a hole 58a. Its outer diameter is slightly bigger than the outer diameter of the partition section 542, and its inner diameter is slightly smaller than the diameter of the basis of linking projection 544. The filter 58 is inserted from the bottom into the insertion member 54, and fixed there immovably.

The filter 58 may be produced e.g. from the 85% voidage, average cell diameter 30 µm, 1 mm thick LDPE. By applying the filter 58 to the fluid route, contamination by small dust from the supplied fluid is prevented, and any breakdowns in the pressure regulation functions of the first check valves 55 and 56, and backflow preventing function of the second check valve 57 is deterred. At the same time any operation malfunction of the body part's 11 operating sections is prevented as well. As far as the foam material is concerned, at least one should be chosen from the following group: polyethylene, polypropylene, polyoxymethylene, polyethylene terephthalate, polyethylenenaphthalate or polyacrylonitrile.

Below, the structure of the pressure vessel 12 shall be explained. The pressure vessel 12 is comprised of a vessel body 102, which at its head part has the feed connector's 3 connection body 30 attached; a storage chamber 103, storing fluid F, which is formed inside the vessel body; an air chamber 104, which is formed inside the vessel body 102, and which is mutually linked at the edge to the storage chamber, and contains compressed gas G, which creates a pressure needed to extrude the fluid F; a piston-shaped closing member 105, arranged in the storage chamber 103 to move freely, which provides a division between the fluid F and compressed gas G; and the elastic plate 108, which is compressed between the bottom part 122 of the vessel body 102, when the partition section 105 moves downward.

The vessel body 102 is composed of the outer vessel 121; a cup body 122, which seals hermetically the bottom of the body 102; and of an inner vessel 123, which is placed inside the outer vessel. In the bottom end section of the inner vessel 123 a notch 111 is formed, which extends in the vertical direction. The inner space of the inner vessel 123 and the inner space of the outer vessel 121, namely the storage chamber 103 and the air chamber 104 can communicate. The top edge section of the inner vessel 123 is engaged by the nut 35, and thereby fastened to the bottom edge section of the connection mouth part 31, so the inner vessel is being kept. A through hole 123a opens in the center of the bottom edge section of the inner vessel 123, and in response to the opening and closing of the valve mechanism's 6 stem valve, the fluid F from the storage chamber 103 can be discharged.

Further, the partition section 105, which is inserted in a sliding-free manner to the inner vessel 123, is composed of the body 151 and an elastic seal member 152 (O-ring). The outer periphery of the seal member 152 adheres tightly to the inner wall of the cylinder shape inner vessel 123, and in the upper space, i.e. the storage chamber the fluid F is being stored. The partition section 105 functions as a movable partition, separating the fluid F received by the storage chamber from the compressed gas received by the air chamber 104. Due to the pressure of the compressed gas operating from the back, the front fluid F is pressurized, and when the stem valve 61 opens, the fluid F is discharged.

The filling the air chamber 104 with the compressed gas G is performed before the filling the storage chamber 103 with the fluid F with the feed connector separated. In response to the injection of the compressed gas to the storage chamber 103 through the stem valve 61, which opens due to the filling operation, the partition section 105 descends. By the fact, that the compressed gas is injected to the storage chamber 103 to a position further than the one shown on the fig. 1, the partition section 105 deforms the elastic body 108, and moves further to the bottom of the storage chamber 103. In the lowest position of the section 105, the top end part of the notch 111 stands above the seal member 152 of the partition section 105, and the compressed gas is injected from the storage chamber into the air chamber through the notch 111. Then, when the pressure inside the air chamber 104 reaches the set value, and the injection is stopped, the stem valve 61 opens again and the compressed gas is exhausted from the storage chamber 103. In response to that, the partition section 105 returns to the sealed condition of the storage chamber 105. It moves further forward to the top end of the inner vessel 123 due to the exhaustion of the gas. By the complete exhaustion of the gas from storage chamber 103, the air chamber 104 is filled with the compressed gas G. Then, by connecting a fluid feeder device to the feed connector 3 with the closing member 105 being descended, the fluid F is injected into the storage chamber 103 through the stem valve 61. By doing that a pressure vessel is obtained, containing the fluid F, which can be exhausted.

Furthermore, the pressure vessel can contain compressed gas in the form of a fluid. In such a case the inner vessel is not used and the gas is stored directly in the outer vessel. In order to obtain the inner pressure (primary pressure), needed to spout the supply fluid, the fluid may be enriched with some propellant, being of so called "aerosole structure".

During the connection operation of the connector 2 and the feed connector 3, substantially the connection mouth part 31 of the feed connector 3 is inserted to the insertion member 54 of the connector 2. By preserving the sealed state with a contact with seal member 33, the valve mechanism 6 of the feed connector 3 opens, the fluid duct is connected and the supply is possible; the ratchet mechanism 4 is locked.

The order of these operations is as follows. During the connection creating (mounting), firstly the seal member 33 comes into contact with the inner face of the cylindrical part 541 of the insertion member 54, and after securing the sealed condition, the stem valve 61 of the valve mechanism 6 opens due to the action of the tip of linking projection 544, and the fluid supply duct is connected. Then the second ring 44 of the ratchet mechanism 4 rotates and locks itself. On the other hand, during the disconnection operation (dismounting), the second ring 44 of the ratchet mechanism 4 rotates and unlocks itself, the stem valve 61 opens and closes the connection. In the end, the seal member 33 separates from the insertion member 54, and the sealed condition is terminated.

Below, referring to figs. 5, 6, 7 and 8, the connection of the feed connector 3 to the connector 2 shall be explained, and in particularly the movements of the ratchet mechanism.

In the separation state before the connection, as shown on the fig. 2, the step part 463 of the ratchet mechanism's 4 spring holder 46, contacts and produces pressure on the locking projections 444 of the second ring 44. Guide projections 432 and 442 of the first ring 43 and second ring 44 are in the second guide groove 424 of the ratchet holder 42, and the second ring 44 cannot rotate. The descended position of the third ring 45 is a regulated position. In this condition, the first check valve of the regulation mechanism 5 closes, and the stem valve 61 of the feed connector 3 is closed as well.

In response to the push-in operation of the feed connector 3, the interlocking projections 321 for locking the connection cylinder 32 pass through the vertical grooves of the first ring 43 and second ring 44, as shown on fig. 7. The bottom end of the spring holder 46 contacts the inner end surface 324 of the feed connector 3, and is pushed upward. Continuing, the pressure step 322 contacts the bottom face of the first ring 43 and pushes it upward. Concurrently, the second ring 44 also rises, comes into contact with the bottom face of the third ring 45, stopped at the bottom end of the first guide groove 421. The third ring 45 is raised as well. Meanwhile, the guide projection 442 of the second ring 44 leaves the top edge of the second guide groove 424 of the ratchet holder 42, and can be turned.

By the contact of the second ring 44 with the slanted surface of the ratchet teeth 453 on the bottom face of the third ring 45, a force is generated forcing the rotation of the ring 44 in direction d.

Fig. 5 shows a condition, where the feed connector is pushed to its maximum position. In this state, the upward move of the third ring 45 is restrained/regulated. By the contact of slanted surfaces of the second ring 44 and the third ring 45, the top of the first ring 43 is turned toward the rotation direction d. As shown on the fig. 8, by the rotation of the second ring 44 its locking projections 444 move inside the interlocking projections 321 of the feed connector's 3 connection cylinder 32 and interlock, so they are locked and cannot move. In the condition shown on the fig. 5, the linking projection 544 opens the stem valve 61 and initiates the fluid supply.

Subsequently, when the push-in operation is released from the maximum push-in position, by the biasing force of the unlock spring 47, the feed connector 3 is biased backward, but the interlocking projections 321 of the feed connector's 3 connection cylinder 32 interlock with locking projections 444 of the second ring 44, and move downward. The third ring 45 and the first ring 43 move downward as a whole structure as well. Then, when the third ring 45 moves downward and stops at the bottom end of the first guide groove 421, the second ring 44 separates and moves further downward. The slanted surfaces of both rings are being separated. Through the previously described rotation, the tips of the guide projections 442 at the bottom end of the second ring 44 move from the second guide groove 424 position onto the slanted surface of the ratchet convex part 423. When they come into contact on the slanted surface, the second ring 44 descends further downward, and rotates further along the slant.

Then, the guide projection of the second ring 44 contacts the engaging step, and the rotation is stopped. Simultaneously, the further downward move is stopped, the feed connector 3, which is interlocked to the locking projection 444 of the second ring 44, is locked and connected in an unseparable locked condition.

Fig. 6 is a cross section of that locked condition. The pressure regulation mechanism 5 operates and the fluid adjusted to the set pressure value is supplied from the body part's 11 side to the exhaust opening 514.

As for the releasing operation from the locked condition described heretofore, when the push-in operation of the feed connector 3 is repeated, the first ring 43 and the second ring 44 move upwardly, and the bottom end part of the second ring 44 separates from the engaging step, so the rotation is possible. The second ring 44 turns by the slanting surface of the ratchet teeth 453 of the third ring 45. With the backward move of the feed connector occurring afterwards, the slanted surface of the guide projections 442 of the second ring 44 comes into contact with the slanted surface extending from the engage step of the ratchet convex part 423 to the second guide groove 424. By this contact, the second ring 44 turns further toward the rotation direction d. It rotates, until the guide projections 442 are inserted in the second guide grooves 424. At this rotation position of the second ring 44, as shown on the drawing 7, the interlocking projection 321 parts from the locking projection 444, and equals its position with the vertical groove. The interlock is released, and the connection cylinder 32 of the feed connector 3 can be now separated. It is separated by the biasing force of the unlock spring 47 through the spring holder 46, and is pushed out.

The pressure regulation mechanism, by the pressure regulation of the regulation valve 55 and the check valve 56, in response to the movement of the diaphragm 52, regulates the primary pressure to the set secondary pressure value, regardless of the primary pressure value, what is discussed below in details.

Fig. 6 shows the pressure regulation state. The fluid, with its pressure regulated by the regulation valve 55 and the check valve 56, flows into the pressure regulation chamber, and being accurately depressurized to the secondary pressure leaves through the exhaust opening 514.

The diaphragm 52 is kept at the balanced position by the biasing force of the pressure difference between the secondary pressure and the atmospheric air pressure, and the biasing force of the pressure regulation spring 513. If, in a response to the fluctuation of the amount of fluid exhausted from the exhaust opening 514, and the fluctuation of primary pressure, the secondary pressure changes, the deviation range of the diaphragm 52 changes as well. With the change of the shaft's 522 position, the regulation valve 55 and the first check valve 56 move, open and close from mutually reversed directions and preserve a fixed secondary pressure. By moving the regulation screw 512, the biasing force of the pressure regulation spring 513 is changed, and the secondary pressure can be adjusted according to requirements.

Moreover, the pressure regulation characteristics of the regulation valve 55 and the first check valve 56 are reversed in order to change the primary pressure. With the decrease of the primary pressure, the secondary pressure increases when regulated by the regulation valve 55, and decreases when regulated by the first check valve 56. Within the shaft 522, the pressure loss produced at the tip of the shank 524 by the exposed area of the regulation valve 55 and being an effect of the primary pressure, and the pressure loss produced at the boss part 523 by the exposed area of the first check valve 56 and being an effect of the secondary pressure, together operate thereupon the shaft 533 is moving in the same backward direction. Therefore due to the combination of their both characteristic, the secondary pressure fluctuation is fixed regardless the fluctuation of the primary pressure.

In short, when a secondary pressure fluid is exhausted from the pressure regulation chamber 530 and the secondary pressure drops, the diaphragm's 52 shaft 522 moves forward (downward on the drawing), the regulation valve 55 and the first check valve move respectively toward the opening and closing directions. Then the primary pressure fluid is depressurized by the regulation valve 55. It enters the pressure regulation chamber 530, and the secondary pressure rises. The rise of the secondary pressure above the set value with the pressure drop fluctuations of the primary pressure is regulated by the first check valve's 56 opening degree (pressure loss). When the secondary pressure reaches the set value, deflation of the diaphragm 52 causes the shaft 522 to move backward (upward on the drawing). Due to the closing of regulation valve 55 and the decrease in the amount of supplied fluid, the pressure regulation acquires the fixed secondary pressure.

The pressure regulation characteristics of the primary pressure takes into account the aberration due to receiving the pressure of the regulation valve 55 versus the gradual drop of the primary pressure within the pressure vessel 12, when the fluid is supplied from it. The first check valve opens and closes in the opposite direction than the regulation valve 55. The pressure loss of check valve 56 has the same direction as the pressure loss of the regulation valve 55, and nearly reversed characteristics. Contrary to that, the pressure regulation characteristics of the first check valve 56 is that it restraints the secondary pressure, when the primary is low; especially when the primary pressure equals 0 it is closed and prevents the backflow of the fluid; it is unlocked with the increase of the primary pressure, so when the primary pressure rises, the secondary does so as well. Therefore it possesses a characteristic reverse to the regulation valve 55.

Both pressure regulation characteristics operate to the same direction to the shaft 522. The pressure regulation characteristics, which is a product of combination of both reversed characteristics of regulation valves 55 and 56, allows for obtaining a fixed secondary pressure against the fluctuation of the primary pressure. In short, when a fluid is supplied from the pressure vessel 11, and the primary pressure drops and fluctuates, the two pressure regulation characteristics - that due to the pressure loss effecting by the regulation valve 55, the secondary pressure rises, and that due to the pressure effecting by the check valve 56 the secondary pressure is lowered - are combined. Such combined characteristics are appropriately balanced, and the fixed secondary pressure is maintained reliably by this simple structure.

Moreover, in a separation state or when not used, the first and second check valves, respectively 56 and 57, function as backflow preventing check valves in order to prevent a leakage of the fluid.

F10 and 11 show another as compared for example with figs. 1 and 9, exemplary implementation of the second check valve 57'. According to fig. 9, the check valve 57 was made from one elastic plate, i.e. rubber plate. In the case of the second check valve 57', the plate is composed of three layers wherein the centre-layer has form of a foam body 57a, and both top and bottom layers are elastic plates with an impermeable skin 57b, e.g. made from poron. Since the most part of check valve is formed by the foam body 57a, the valve is light. The top layer 57b eliminates any up-and-down gas permeability. When a pressure on the introduction opening side is lower than the secondary pressure, and the secondary pressure is high, due to the pressure operating from the top of the figure, it rapidly closes the connection opening 543 of the partition section 542, and a stabilized backflow check effect is obtained.

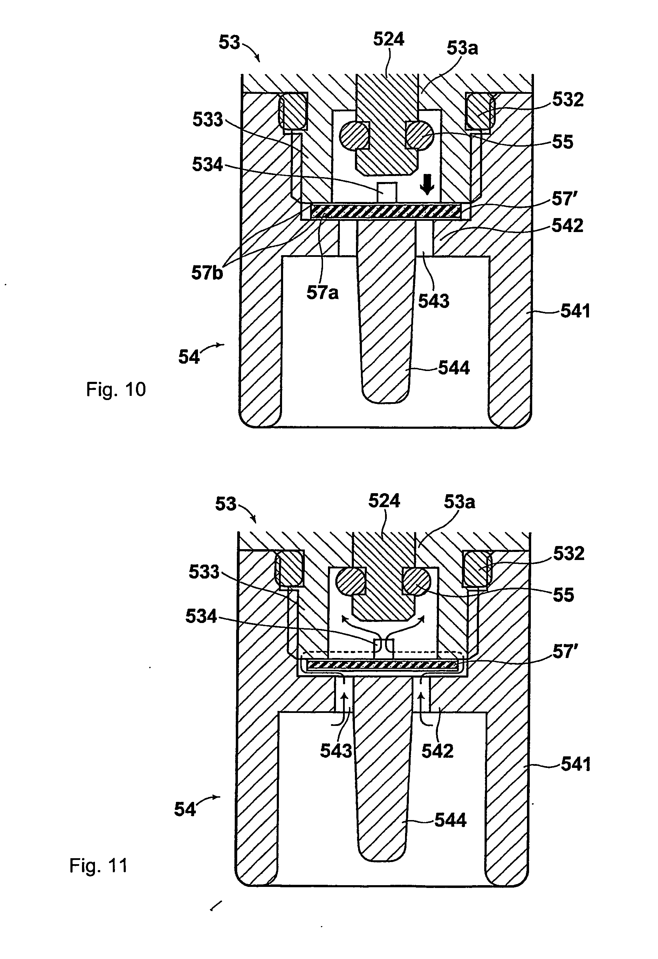

In the case of the second check valve 57', a compression transformation is possible, and it is assembled between the tip of body case's 53 connection cylinder 533, and the top face of insertion member's 54 partition section 542 in a compressed condition, as shown on fig. 10.

Fig. 11 shows the following process. With a pressure fluid introduced, due to the pressure of a pressure fluid operating from the connection opening 543, the second check valve 57' transforms compression. By that the pressure fluid, which has separated from the top face of the partition part 542 and has opened the connecting opening 543 entering through it, passes around the outside periphery of the second check valve 57', and, passing through the tip notch 534 of the connection cylinder 533, enters the inside periphery, and through the regulation valve 55 enters the pressure regulation chamber 530.

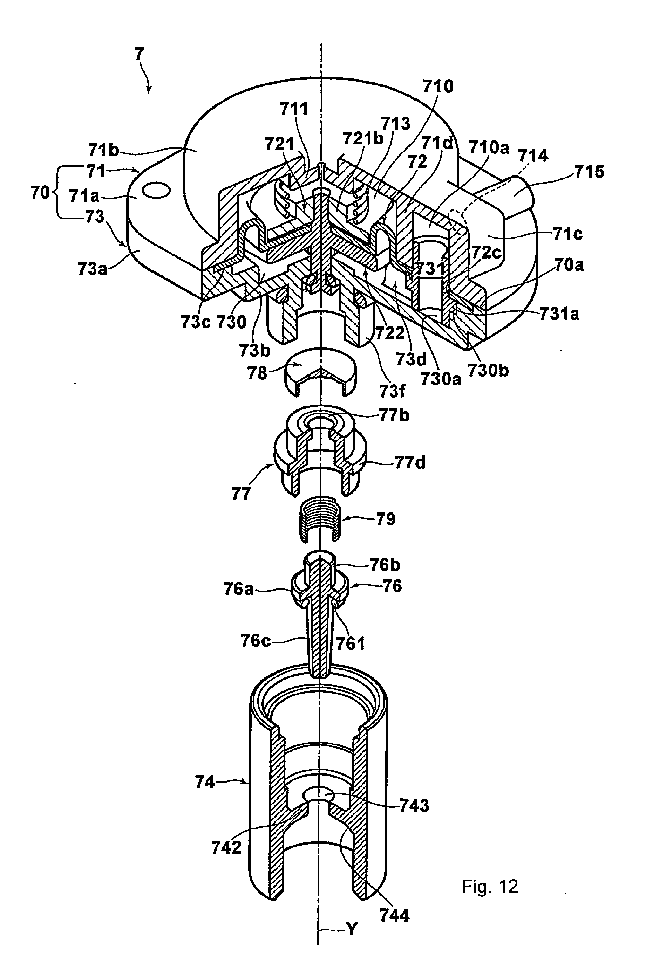

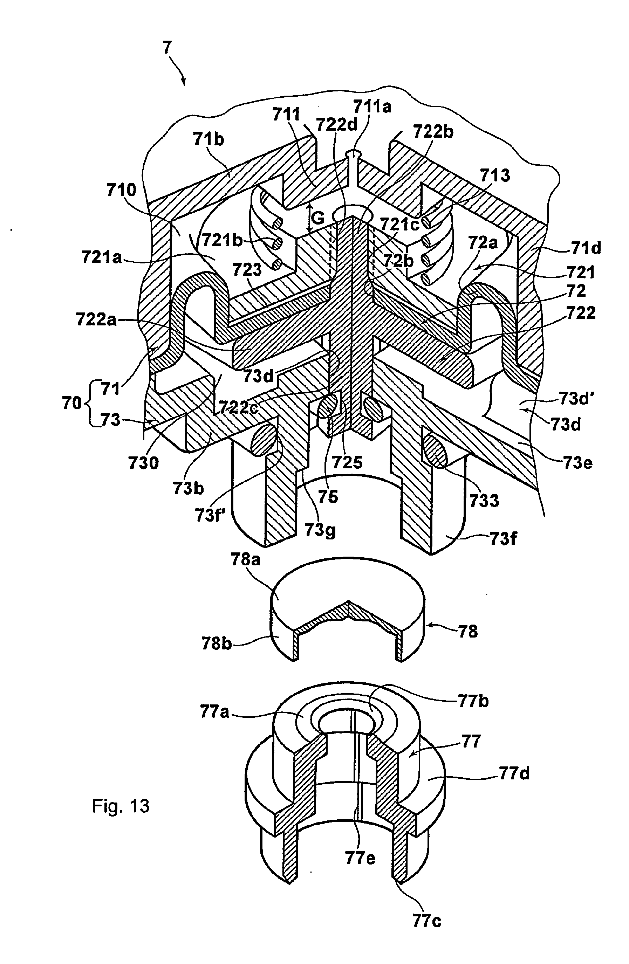

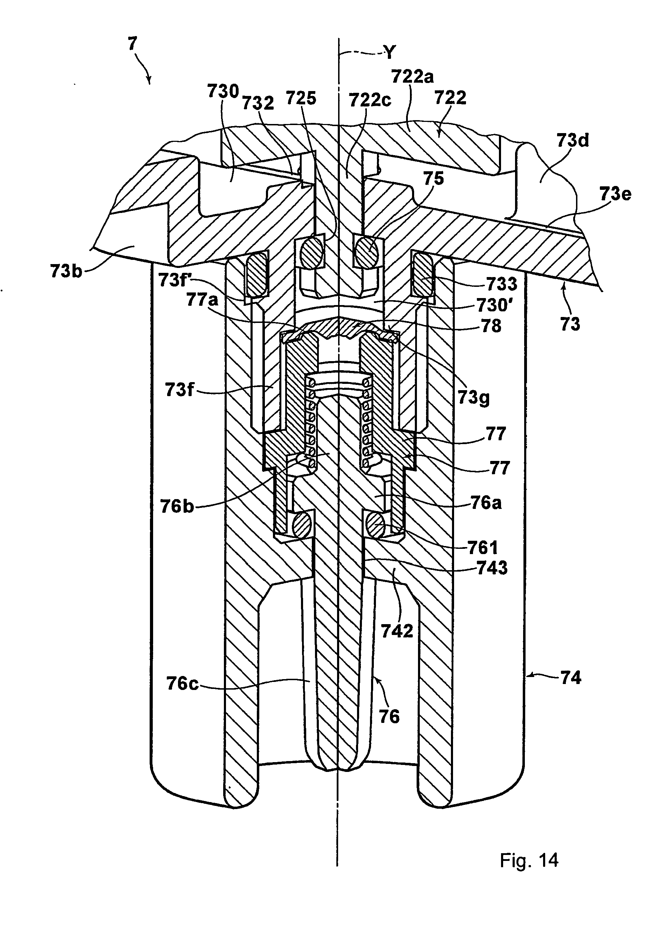

With references to figs. 12-14, another features of the present invention shall be discussed below. In the following contemplations, we assume that the same connector 2 and pressure vessel 12, as described in connection with the above exemplary embodiments of the invention, are used. Therefore, we shall not repeat here explaining constructional feature thereof. Fig. 12 is a sectional cross section exploded perspective view of the pressure regulation mechanism, from which a segment of about 90 degrees of the circle centered around the mechanism Y axis has been cut out. Fig. 13 is an enlarged sectional cross section of the upper part of the pressure regulation mechanism 7 from fig. 12. Fig. 14 is a part cross section exploded perspective view, in which the lower part of the pressure regulation mechanism 7 assembled on fig. 12, is cross-cut within a segment of around 90 degrees of the circle centered around its axis Y. Moreover, the parts are shown separately.

As shown on fig. 12, the pressure regulation mechanism 7 has a housing 70, comprised of a body case 73, a cover case 71, and a cylindrical insertion member 74, installed on the body case 73. The body case 73 and the cover case 74 have respectively bulge parts 73b and 71 b, and flanges 73a and 71 a of the same shape on the outer periphery. On the bulge 73b, there is a through hole 73d, matching the axis Y (figs 13 and 14). The flanges 73a and 71 a of the body case 73 and the cover case 71 abut one another and are joined for example by a screw (not shown on the figure).

On the abutting surface 70a (fig. 12) of the body case's 73 flange 73a, there is formed a hollow part 73c. It is formed on the whole circumference, inside the flange 73a. In this hollow part 73a a diaphragm 72 is placed, and by connecting flanges 73a and 71 a, the diaphragm 72 between them is pressed and fixed. Since by creating the hollow part 73c the diaphragm 72 is secured at a fixed position, the possibility that due to a distorted assembly of the diaphragm during the above mentioned connecting, pressing and fixing, there might occur leakages of the fluid, is decreased.

The diaphragm 72 is substantially a flat, plate-shaped elastic part, made for example from rubber, and has a circle-shaped curve deflected part 72a (fig. 13) with the axis Y as its center. Moreover, in the part of the diaphragm 72 corresponding to the axis Y there is a round opening 72b (fig. 13). There is a support element 721 from the diaphragm's 72 curve deflected part 72a to the inside top face.

On the other hand, there is a shaft 722 at the position opposite to the support element 721, with the diaphragm 72 inserted in between. Terms "up" and "down" means "up" and "down" directions on figs. 12-14.

The support element 721 is provided with a flat plate 721 a, contacting with the upper face of the diaphragm 72 (drawing 13), and a projecting part 721b, projecting upwardly from the flat plate 721 a. It would be desirable, if the support element 721 were constructed from a light material, like for example polyoxymethylene (POM), but metal is also acceptable. The upper face of the projecting part 721 b is flat. Further, in the projecting part 721 b there is formed an internal thread, parallel to the axis Y (fig. 13).

Shaft 722 is provided with a flat plate 722a, placed at the bottom face of the diaphragm 72 (fig.13), and shanks 722b and 722c, extending respectively toward upward and downward directions from the flat plate 722a (fig. 13). The shank 722b passes through the opening 72b of the diaphragm 72 and protrudes upwardly. The shank 722c passes through the through hole 73d of the body case 73 and extends downwardly. On the shank 722b an outward thread 722d is formed, which fits with the inward thread 721c of the support element 721, and tightens the diaphragm 72 from both sides. Therefore, the diaphragm 72 forms one whole structure, being inserted between the support element 721 and the shaft 722. Moreover, it would be desirable, if there were a low friction coefficient element, like for example a polyethylene terephthalate (PET) film 723 (drawing 13) placed between the support element 721 and the diaphragm 72. Owing to this, when the support element 721 is screwed to the shank 722b, there will be a lesser danger of deflating the diaphragm 72 by friction. Naturally, the film as used in this embodiment, may also be used in the previous described implementation.

In the inner surface of the cover case's 71 bulge part 71 b, there is formed a convex portion 711, in a position corresponding to the projecting part 721 b. The tip of the convex portion 711, i.e. the bottom face, has the same flat shape as the top face of the support element 721. In the center of the convex portion 711, there is a small opening 711 a (fig. 13) to the outer part. Since within the outer part there is usually the atmospheric air pressure, the space inside the bulge 71 b is preserved by the atmospheric air pressure, becoming an atmospheric air chamber 710.

On the outer periphery of the projecting part 721 b of the support element 721 and of the convex portion 711 of the cover case 71, there is a pressure regulation spring 713. This spring permanently presses the diaphragm 72 downwardly through the support element 721 with a fixed pressure. With an ordinary usage of the pressure regulation mechanism 7, between the bottom face of the convex portion 711 and the top face of the projecting part 721 b of the support element 721, a gap G is secured (fig. 13). Due to that, when the feed pressure of the fluid becomes excessive, the shank 722c of the shaft 722, which shall be described shortly below, is pushed and raised upwardly, and by the contact of the top face of the projecting part 721 b of the support element 721 and the bottom face of the convex portion 711 of the cover case 71, the excessive deflation of the diaphragm 72 is prevented.

In the cover case 71 there is formed an extension part 71c, bulging to the side from the bulge part 71 b (fig. 12). Within the extension part 71 c, there is a pipe 715 with an exhaust opening 714, extending from the extension part 71c to the outside. Further, within the cover case 71 there is a column-shaped space 710a formed by the partition wall 71d, connected to the exhaust opening 714. (fig. 12). On the other hand, in a part of the body case 73 corresponding to the space 710a, there is a substantially column-shaped space 730a, formed by the partition wall 73d. On figs. 12 and 13, the end surface 73d' of the partition wall 73d (fig. 13) is shown. At the position opposite to the end surface 73d' there is another partition wall's 73d end surface. Both end surfaces forms between them a groove 73e (figs. 13, 14). Within the body case 73 facing the space 730a, there is an up-facing substantially round-shaped step part 730b. Within the diaphragm 72, there is a round opening 72c, corresponding to spaces 710a and 730a (fig. 12). Within spaces 710a and 730a, the cylinder member 731, which has a flange 731, passes through the opening 72c in the diaphragm 72. At this connection, the flange 731 a of the cylinder member 731 is mounted onto the step part 730b. The cylinder member 731 is sized in the longitudinal direction as to create a gap between its bottom edge and the inner surface of the bulge part 73b (figs. 13, 14). It becomes a duct guiding the fluid passing through the groove 73e to the exhaust opening 714. In other words, the duct becomes an exit for exhausting the pressurized fluid, stored in the pressure regulation chamber described below. The cylinder member 731 is made for example from the polyoxymethylene. Still further, however in this embodiment, the extending part 71 c, the exhaust opening 714 and the pipe 715 were formed, there is no need to limit oneself in such a way within the scope of the invention, and one may consider a different structure supplying a fluid stored within the pressure regulation chamber outside (e.g. to the fuel cell), for example an extending part, an exhausting opening and a pipe in the body case 73.

Between the bulge part 73b, the shaft 722 and the diaphragm 72 of the body case 73, there is formed a space, namely a pressure regulation chamber 730. In the tip part of the shank 722c of the shaft 722, protruding downwardly after passing through the through hole 73d of the extending part 73b, there is a circumferential groove 725 (fig. 13), with a regulation valve 75 attached in it. This valve is driven up and down by the diaphragm 72. It cuts off and enables the fluid flow passing between the shank 722c and the through hole 73d, and regulates the fluid pressure in the pressure regulation chamber 730. Further, since, as described above, the diaphragm 72 is of elastic nature, when the shank 722c, to which the shank 522, namely regulation valve 75, is attached, leans due to vibrations of the diaphragm 72, the valve seat at the bottom face of the extending part 73b is wounded, and there is a danger of the pressure control malfunction. Therefore the outer periphery of the flat plate 722a of the shaft 722 is leaned and supported by the partition wall 73d of the body case 73 and the inner periphery surface of the extending part 73b. By doing that in a position relatively close from the diaphragm 72, it is possible to decrease the lean of the shank 722c.

As shown on fig. 14, in the top surface of the body case 73, namely the surface facing the pressure regulation chamber 730, there is a passing groove 732, through which passes the fluid, which previously had passed the above-mentioned space in between. The groove is placed in the position between the opening and the shank 722c, as to extend from the inside to the outside of the space. Due to such a construction, if the pressure of a fluid supplied from the pressure vessel is low, by the opening of the regulation valve 75 and the downwardly move of the shaft 722, the bottom face of the flat plate 722a of the shaft 722 and the top face of the body case 73 contact, and any hindrance in the fluid flow can be prevented. Moreover, since the passing groove 732 is placed in an opposite position between the opening and the shank 722c, due to the broad scope of the fluid flow in the pressure regulation chamber 730, it is more difficult for a gas in the pressure regulation chamber 730 to remain there, the causes for abnormal vibrations of the diaphragm 72 (chattering; below referred to as "chattering") lessen, and the operation of the pressure regulation mechanism 7 is more stable. According to this embodiment, the passing groove was created as described heretofere, but it may as well be put in the body case 53 of the pressure regulation chamber 5 of the previously described embodiment.

Moreover, the pressure regulation chamber 730 is substantially formed only by the moving space of the diaphragm 72 and the shaft 722, and the flow duct. Usually, as far as the pressure control of the compressed fluid, e.g. gas, is concerned, there was a need to prepare a pressure regulation chamber big enough to absorb pressure differences, in order to control the chattering of the diaphragm caused by more easily occurring vibrations of the fluid, when due to for example opening and closing of valves or the intrusion caused momentarily pressure differences at the input. However, with a non-compressed fluid, as liquid, since it is hard for the vibrations to occur, it is possible to decrease the volume of pressure regulation chamber 730, and make one (pressure regulation chamber 730) as previously described. Moreover, the pressure regulation chamber 730 may be redesigned conveniently as to match the fluid stored in it.

In the extending part 73b of the body case 73, there protrudes downwardly a circular wall 73f, as to surround the tip part of the shank 722c. At the outer periphery of its base there is a round groove 73f (fig. 13), in which a O-ring 733 is attached. On the outer periphery of the circular wall 73f there may be (not shown on the figure) a thread, as to fit the insertion member 74.

The insertion member 74 is a member to which the feed connector 3 of the pressure vessel 12 described previously (see fig. 1) is connected. It has at the center of the longitudinal direction a partition section 742. In this part, there is an opening 743, receiving a linking projection 76c of the plug 76, which shall be described below. The inner periphery surface surrounding the received linking projection 76c, namely inner periphery surface down of the partition section 742, has taper, so that the diameter of the opening would become wider in the downward direction (since the taper is very small, it is not shown on the figure). By providing that, the valve mechanism 6 may be inserted smoothly during the connection of the feed connector 3, the operability increases. The taper is designed in such a manner that there is a sealing action provided by the seal member 33 before the stem valve 61 of the valve mechanism 6 opens during the connection of the feed connector 3. Further, the angle made by the inner periphery surface and partition part 742 becomes a C surface 744. Owing to this, the "dead space" of the introducing member 74 is reduced, and the fluid leakage during connecting and disconnecting of the feed connector 3 is reduced as well. Still more, with this implementation embodiment, there has been created the above mentioned taper and the C surface, but they may as well be formed in the introducing member 54 of the pressure regulation mechanism of the previously described implementation embodiment.

Between the partition section 742 and the extending part 73b there are arranged (from the top) a filter 78, a coupler 77, a helical compression spring 79 (referred to below as the "spring"), and a plug 76.

The coupler 77 has generally a cylindrical shape and is provided with an upper wall 77a, made for example from polyoxymethylene. In the center of the upper wall 77a of the coupler 77 there is an opening 77b, and between the upper wall 77a and the bottom end 77c there is formed a circle-shaped flange 77d, extending outwardly.

The filter 78 has a shape of a circular wall 78b hanging down on the outer periphery of the circle-shaped plate part 78a, and it is mounted on the upper wall 77a of the coupler 77. By providing such a shape, when the filter 78 is placed on the introducing member 74, it is done easily, and the operability increases. Once more, since the circular wall 78b seals the outer periphery of the coupler 77, the fluid, which has passed the flow duct of the coupler 77 described below, does not leak through said opening 77b, and passes reliably through the filter 78. Since the filter 78 is placed higher than the partition section 743, when the feed connector 3 is being connected or disconnected, it does not come into contact with the valve mechanism 6, and therefore the possibility of the filter 788 coming off is decreased. The fluid-passing area of the fluid passing through the filter 78 may vary according to the width of the opening 77b. When the area is wide, the flow speed of the fluid accelerates. Therefore, for example at times of the initial stage, when there is no fuel (fluid) in the fuel cell, the fluid may be supplied rapidly.

Still more, in this implementation embodiment, the filter 78 is shaped in the described way, but the invention is not limited to this example. The filter may be for example plate-shaped element. The material of the filter 78 is the same as the material of the filter 58.

When the coupler 77 is assembled, the flange 77d comes into contact with the bottom end of the circular wall 73f of the body case 73, and the filter 78 is held between the down facing step part 73g of the circular wall 73f and the upper wall 77a of the coupler 77. The upper part of the filter 78 becomes an intermediate pressure regulating chamber 730' (fig. 14), to which the tip part of the shank 722c of the shaft 722 is projected. On the inner surface of the coupler 77 there are multiple grooves 77e (fig. 13), extending upwardly and downwardly, isolated mutually on the coupler's 77 inner surface. These grooves 77e forms a flow duct for passing of the supplied pressurized fluid.

The plug 76, as described before, is a pin-shaped plug made from stainless steel or polyoxymethylene. Near the top of the plug there is a round plate-shaped flange 76a. The upper shaft 76b, projecting upwardly from the flange 76a, has a diameter that enables inserting thereof inside the spring 79. The lower shaft 76c, projecting downwardly from the flange 76a, converges toward the bottom end of the flange 76. In other words it has tip narrowing shape with taper. On the lower shaft 76c there is the O-ring 761 close to the flange 76a. This lower shaft 76c becomes the linking projection 76c, functioning as a linking member operating with the stem valve 61. The linking projection 76c has a regulation valve 75 and constitutes a structure separated from the shank 722c, moving in response to the diaphragm 72, so the diaphragm 72 does not receive any deviation force during the connection operation.

In a word, as according to implementation embodiment described heretofore, since the diaphragm 72 and the linking projection 76c are separated, the pressure regulation function is preserved, and the supply of a fluid with pressure higher than the set secondary pressure is prevented.

When the insertion member 74 is assembled to the circular wall 73f, the spring 79 and the plug 76 are hold between the upper wall 77a of the coupler 77 and the partition section 742 of the insertion member 74. Then the flange 76a of the plug 76 is urged below the spring 79, and the O-ring 761 is pressed between the flange 76a and the partition section 742. When the feed connector 3 is not connected to the insertion member 74, the O-ring 761 adheres to the partition section 742 and the flange 76a, due to the biasing force of the spring. Therefore, the pressurized fluid inside the pressure regulation mechanism 7 is prevented from leaking outside from between the linking projection 76c of the flange 76 and the opening 743 of the partition section 742. Since such a structure is a structure independent from the regulation valve 725, it is not influenced by the secondary pressure of the fluid or by the secondary pressure setting.

Referring to fig. 15, the connection of the feed connector 3 with the described pressure regulation mechanism 7 shall be discussed in details. Fig. 15 is a cross section of the pressure regulation mechanism 7 in the state of being connected to the feed connector 3. Fig. 15 shows the cross-section of the most important part. As shown, when the feed connector 3 is installed onto the pressure regulation mechanism 7, the plug 76 is pressed upwardly by the stem valve 61. Then, since the plug 76, namely the linking projection 76c and the regulation valve 75, together with the shank 722c, moving with the diaphragm 72, are installed separately, the force of the upward pressure do not effect the diaphragm 72 and the pressure regulation function.

Then, the opening 743 of the introducing member 74, tightly sealed by the O-ring 761, is opened, and the pressurized fluid passes successively through the opening 743, the groove 77e inside the coupler 77 and the filter 78. Since in the connection initial state of the feed connector 3, the pressure of the fluid within the pressure regulation chamber 730 is low, the diaphragm 72 is biased downwardly by the pressure regulation spring 713. Consequently, because the regulation valve 75 sealing the through hole 73d of the body case 73 moves downwardly as to separate from the through hole 73d, the sealing is removed from it. Therefore, the fluid, which passed through the previously described passage duct of the filter 78; the intermediate pressure regulation chamber 730'; the space between the through hole 73d and the shank 722c; the pressure regulation chamber 730 and the cylindrical member 731, is supplied to the fuel cell from the exhaust opening 714.

As generally used, the diaphragm 72 is set to achieve the fixed secondary pressure by the action of the pressure regulation spring 713, when the pressure of the supplied fluid is for example 900 Kpa-1 Mpa. In other words, when the pressure of the fluid supplied from feed connector 3 is higher than the pressure of the fluid which ought to be supplied, the fluid from the pressure regulation chamber 730 presses the diaphragm 72 upwardly, opposing the biasing force of the pressure regulation spring 713. In result, the shank 722c of the shaft 722 moves upwardly. The regulation valve 75 seals the through hole 73d of the body case 73, and more of the pressurized fluid is prevented from entering the pressure regulation chamber 730. The pressure exerted by the pressurized fluid onto the diaphragm 72 is not in a strict sense only the pressure from the pressure regulation chamber, but as well the one exerted onto the regulation valve 75 inside the intermediate pressure regulation chamber 730'. That is to say, that since the primary pressure in the exposed area X of the intermediate pressure regulation chamber 730' is exerted onto the regulation valve 75, the regulation valve 75 may close or crawl into the valve seat and change shape, due to only the above mentioned pressurized fluid pressure. When the pressure inside the pressure regulation chamber becomes low, due to the biasing force of the pressure regulation spring 713, the shank 722c of the shaft 722 descends, opens the through hole 73d, and enables again the pressurized fluid to enter the pressure regulation chamber.

In that way, the diaphragm 72 constantly moves up and down in reaction to the fluid pressure's fluctuation. However, since the moving distance is extremely short, for example about 0.3 mm, the width of the gap between the above mentioned gap G, namely the top face of the projecting part 721 b of the support element 721, and the bottom face of the convex portion 711 of the cover case 71, is kept substantially fixed. The regulation valve 75 is shown as to contact the body case 73 when the pressurized fluid flows, but as a matter of fact the gap between them is extremely small, and the passage of the pressurized fluid is possible.

## Claims

**1.** The pressure regulation device with a body part, which contains a pressure regulation mechanism equipped with a regulation valve, which operates in response to the deviation of a diaphragm and regulates the pressurized fluid to the fixed secondary pressure, and with a connector, to which a pressurized fluid supplying feed connector may be connected, wherein the connector has a linking member opening a valve mechanism of the feed connector in response to the connecting operation of the feed connector, **characterized in, that** the linking member and the regulation valve are made separately.

**2.** The pressure regulation device according to claim 1, **characterized in, that** the valve mechanism is provided with a stem valve placed substantially at the center of the shaft of the valve mechanism, the linking member is provided with a linking projection extending toward the direction of the connecting operation, wherein when the connector and the feed connector are connected, the tip part of the linking projection contacts the stem valve and opens it.

**3.** The pressure regulation device according to claim 2, **characterized in, that** the pressure regulation mechanism is provided with a substantially cylindrical insertion member, comprising a projecting inwardly partition section placed at the fixed place of the direction of connection, the section having said linking projection placed substantially at the center thereof and connecting opening placed on both sides of the linking projection, passing through the partition section.

**4.** The pressure regulation device according to claim 2, **characterized in, that** the pressure regulation mechanism is provided with a substantially cylindrical insertion member, comprising a projecting inwardly partition section placed at the fixed place of the direction of connection, the section having an opening with said linking projections passing through the opening, wherein the opening is placed substantially in the center of the partition section, and wherein on the side where the feed connector is being connected and the other side, there is placed a substantially cylindrical coupler, holding a plug with the linking member.

**5.** The pressure regulation device according to claims 1-3, **characterized in, that** additionally it comprises check valves preventing the backflow of the fluid, wherein the check valves are placed inside and outside of the regulation valve of the pressure regulation mechanism.

**6.** The pressure regulation device according to claims 3-4, **characterized in, that** on the inner periphery surface around the linking projection there is formed a taper, so that the diameter of the opening becomes wider towards the feed connector side.

**7.** The pressure regulation device according to claim 3, **characterized in, that** the surface of the partition section side, where the feed connector is being connected, is covered with a disk-shaped dust filter, covering the connecting opening and fixed to the section, wherein the linking projection passes through the filter.

**8.** The pressure regulation device according to claim 4, **characterized in, that** the coupler is provided with a dust filter at the surface of the side where the feed connector is being connected, and on the other side.

**9.** The pressure regulation device with a body part, which contains a pressure regulation mechanism, and with a connector, to which a pressurized fluid supplying feed connector is connected, **characterized in, that** the pressure regulation mechanism is provided with a regulation valve, operating in response to the deviation of a diaphragm, and regulating the pressure of the supplied fluid pressure to the fixed secondary pressure, and with two check valves, preventing the backflow of the fluid, placed on the inside and outside of the regulation valve.

**10.** The pressure regulation device according to claim 9, **characterized in, that** the two check valves are placed inside of the regulation valve, wherein the first check valve is installed on the low pressure side and the closing operation of which is initiated with the deflation of the diaphragm, and the second check valve, the closing operation of which is initiated by receiving a pressure exerted from inside of the regulation valve.11. The pressure regulation device according to claim 10, **characterized in, that** the second check valve has a form of an elastic plate, closing an opening of the passage duct.

**12.** The pressure regulation device according to claim 10, **characterized in, that** the center layer of the elastic plate is made of foam, and the external layers are made of impermeable material.

**13.** The pressure regulation device according to claim 1-12, **characterized in, that** the diaphragm has its outer periphery part inserted between a body case and a cover case from the side of the first surface of the connector and from the opposite second surface, wherein the body case together with the first surface form a pressure regulation chamber, storing the pressurized fluid, and the cover case with the second surface form an atmospheric air chamber, connected to atmospheric air.

**14.** The pressure regulation device according to claim 13, **characterized in, that** in the surface of the body case on the pressure regulation chamber side, there is formed at least one passage groove, through which the pressurized fluid passes.

**15.** The pressure regulation device according to claim 14, **characterized in, that** the pressure regulation chamber is provided with an outlet through which the pressurized fluid regulated to the fixed secondary pressure is discharged, and the passage groove is formed on the opposite location than the outlet and on the opposite side of the axis of the direction of connection.
